# EUROPEAN PATENT APPLICATION

(11) **EP 4 462 699 A1**
(43) Date of publication of application: **13.11.2024**
(21) Application number: 23737159.6
(22) Date of filing: 06.01.2023
(51) Int. Cl.: H04B 10/80

(54) **POWER SUPPLY METHOD AND APPARATUS, STORAGE MEDIUM, AND PROGRAM PRODUCT**

(30) Priority: 06.01.2022 CN 202210012893
(71) Applicant: ZTE Corporation, Shenzhen, Guangdong 518057 (CN)
(72) Inventor: GUO, Qiang, Shenzhen, Guangdong 518057 (CN)
(74) Representative: WBH Wachenhausen Patentanwälte PartG mbB
(86) International application number: PCT/CN2023/071005
(87) International publication number: WO 2023/131297

(57) **Abstract**

The present application discloses a power supply method and apparatus (100), a storage medium, and a program product. The power supply apparatus (100) comprises: photoelectric connection modules (120), power supply modules (110), and a photoelectric control module (130); the photoelectric connection modules (120) are used for connecting to composite cables; the composite cables comprises optical cables and electrical cables; the power supply modules (110) are electrically connected to the electrical cables by means of the photoelectric connection modules (120); the photoelectric control module (130) is connected to the power supply modules (110), and is connected to the optical cables by means of the photoelectric connection modules (120); the photoelectric control module (130) is used for receiving first power supply information of the photoelectric connection modules (120) and second power supply information of the power supply modules (110), and controlling output power sources of the power supply modules (110) according to the first power supply information and the second power supply information.

## Description

### CROSS-REFERENCE TO RELATED APPLICATION

This application is filed on the basis of the Chinese patent application No. 202210012893.6 filed January 6, 2022, and claims priority of the Chinese patent application, the entire contents of which are incorporated herein by reference.

### TECHNICAL FIELD

The present invention relates to the field of telecommunication, and in particular to a method for supplying power, a power supply device, a storage medium, and a program product.

### BACKGROUND

In some cases, for the optoelectronic composite application between 3G/4G/5G base stations or between base stations and RF antennas, electrical cables and optical cables are simply tied together. The optical fiber connector and power supply connector need to be handled separately when electrical cables are being connected on-site. Hence, the real-time matching and coupling of the optical communication services with the power supply are not possible. Thus, it is necessary to control optical signals and electrical signals separately. As a result, the complexity and difficulty of power supply operation are increased for a terminal device, and the reliability is reduced, which leads to a failure in meeting the application requirements of all-optical networks.

### SUMMARY

The following is a summary of the subject matter described herein. This summary is not intended to limit the scope of protection of the claims.

Provided are a method for supplying power, a power supply device, a storage medium, and a program product in some embodiments of the present invention.

According to a first aspect of the present invention, a power supply device is provided. The power supply device includes, an optoelectronic connection module, configured to connect with a hybrid cable that includes an optical cable and an electrical cable; a power supply module electrically connected with the electrical cable in the hybrid cable through the optoelectronic connection module; and an optoelectronic control module, connected with the power supply module and connected with the optical cable in the hybrid cable through the optoelectronic connection module. The optoelectronic control module is configured to receive first power supply information from the optoelectronic connection module and second power supply information from the power supply module, and control an output power source of the power supply module according to the first power supply information and the second power supply information.

According to a second aspect of the present invention, a method for supplying power is provided. The method is applied to a power supply device that includes an optoelectronic connection module, a power supply module, and an optoelectronic control module. The power supply module is electrically connected with an electrical cable in a hybrid cable through the optoelectronic connection module. The optoelectronic control module is connected with the power supply module and connected with an optical cable in the hybrid cable through the optoelectronic connection module. The method includes: receiving first power supply information from the optoelectronic connection module, and receiving second power supply information from the power supply module; and controlling an output power source of the power supply module according to the first power supply information and the second power supply information.

According to a third aspect of the present invention, a power supply device is provided. The power supply device includes a memory, a processor, and a computer program stored in the memory and executable on the processor which, when executed by the processor, causes the processor to carry out the methods as described in the second aspect above.

According to a fourth aspect of the present invention, a computer-readable storage medium is provided. The computer-readable storage medium stores computer-executable instructions which, when executed by a processor, causes the processor to carry out the method as described in the second aspect above.

According to a fifth aspect of the present invention, a computer program product is provided. The computer program product includes a computer program or a computer instruction stored in a computer-readable storage medium which, when executed by a processor of a computer device, causes the computer device to carry out the method as described in the second aspect above.

Other features and advantages of the present invention will be illustrated in the following description, and in part will be apparent from the description, or may be understood by practicing the present invention. The objects and other advantages of the present invention can be achieved and obtained by the structure particularly set forth in the description, claims, and drawings.

### BRIEF DESCRIPTION OF DRAWINGS

The drawings are intended to provide a further understanding of the technical scheme of the present invention, and constitute a part of the specification, and they are intended to illustrate the technical scheme of the present invention in conjunction with the embodiments of the present invention, but are not intended to limit the technical scheme of the present invention.
FIG. 1 depicts a schematic diagram showing a power supply device according to an embodiment of the present invention;
FIG. 2 depicts a schematic diagram showing a power supply device connected to a load according to an embodiment of the present invention;
FIG. 3 depicts a schematic diagram showing a power supply device according to another embodiment of the present invention;
FIG. 4 depicts a schematic diagram showing a power supply device according to yet another embodiment of the present invention;
FIG. 5 depicts a schematic diagram showing a power supply module according to an embodiment of the present invention;
FIG. 6 depicts a schematic diagram showing a power supply device according to yet another embodiment of the present invention;
FIG. 7 depicts a schematic diagram showing an optoelectronic control module according to yet another embodiment of the present invention;
FIG. 8 depicts a schematic diagram showing a power supply device according to yet another embodiment of the present invention;
FIG. 9 depicts a schematic diagram showing a power supply device according to yet another embodiment of the present invention;
FIG. 10 depicts a schematic diagram showing a power supply device according to yet another embodiment of the present invention;
FIG. 11 depicts a schematic diagram showing a power supply device according to yet another embodiment of the present invention;
FIG. 12 depicts a schematic diagram showing a power supply device according to yet another embodiment of the present invention;
FIG. 13 depicts a schematic diagram showing a power supply device according to yet another embodiment of the present invention;
FIG. 14 depicts a schematic diagram showing a power supply device according to yet another embodiment of the present invention;
FIG. 15 is a flowchart showing a method for supplying power according to an embodiment of the present invention;
FIG. 16 depicts a flowchart showing a method for supplying power according to yet another embodiment of the present invention;
FIG. 17 depicts a flowchart showing a method for supplying power according to yet another embodiment of the present invention;
FIG. 18 depicts a flowchart showing a method for supplying power according to yet another embodiment of the present invention;
FIG. 19 depicts a flowchart showing a method for supplying power according to yet another embodiment of the present invention;
FIG. 20 depicts a schematic diagram showing a power supply device according to yet another embodiment of the present invention.

### DETAILED DESCRIPTION

The purpose, technical scheme and advantages of the present invention will become apparent through the following description for various embodiments in conjunction with the drawings. It should be understood that the embodiments described here are intended for illustration but not a limitation of the present invention.

It shall be noted that, in some cases, the operations shown or described may be performed in a different order than the logical order shown in the flowcharts. It should be understood that in the description, the claims, and the description of the drawings, the term a plurality (or plurality) means above more than two; greater than, less than, more than, etc. shall be understood to exclude the number being referred to; and above, below, within, etc. shall be understood to include the number being referred to. Terms "first" and "second" if described, are intended for distinguishing technical features, which shall not be understood as indicating or implying relative importance or implicitly indicating the number of the indicated technical features or the order of the indicated technical features.

Provided are a method for supplying power, a power supply device, a storage medium, and a program product in some embodiments of the present invention. The power supply device includes an optoelectronic connection module, a power supply module, and an optoelectronic control module. The optoelectronic connection module is arranged to connect a hybrid cable including an optical cable and an electric cable. The power supply module is electrically connected with the electric cable in the hybrid cable through the optoelectronic connection module. The optoelectronic control module is connected to the power supply module, and is connected to the optical cable in the hybrid cable through the optoelectronic connection module. Hence, the connections of the optical fiber connector and the power supply connector can be done with "one plug-in". Further, the output power source of the power supply module can be controlled according to the received first power supply information from the optoelectronic connection module and the second power supply information from the power supply module. Thus, the power supply is realized through real-time matching and coupling of the optical communication services with the power supply. Thereby, the complexity and difficulty of the power supply operation are reduced, the reliability and the security of the power supply are improved, and the application requirements of the all-optical networks are met.

Some embodiments of the present invention will be illustrated with reference to the drawings.

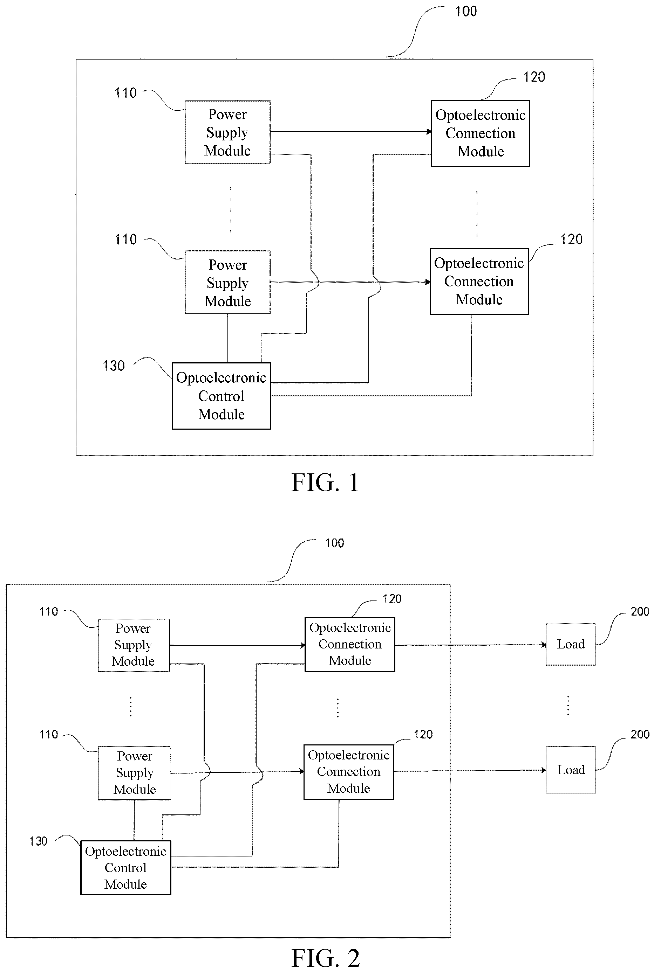

FIG. 1 depicts a schematic diagram showing a power supply device 100 according to an embodiment of the present invention.

As shown in FIG. 1, the power supply device 100 includes an optoelectronic connection module 120, a power supply module 110, and an optoelectronic control module 130. The optoelectronic connection module 120 is configured to connect a hybrid cable including an optical cable and an electric cable. The power supply module 110 is electrically connected with the electric cable in the hybrid cable through the optoelectronic connection module 120. The optoelectronic control module 130 is connected to the power supply module 110, and is connected to the optical cable in the hybrid cable through the optoelectronic connection module 120.

In an embodiment, in the case where the power supply module 110 is electrically connected with the electric cable in the hybrid cable through the optoelectronic connection module 120 and the optoelectronic control module 130 is connected with the optical cable in the hybrid cable through the optoelectronic connection module 120, the optoelectronic control module 130 can receive the first power supply information from the optoelectronic connection module 120 and the second power supply information from the power supply module 110, and control the output power source of the power supply module 110 according to the first power supply information and the second power supply information. Hence, the power supply can be realized through real-time matching and coupling of optical communication services and power supply with one plug of the optical fiber connector and the power supply connector. The complexity and difficulty of power supply operation are reduced, the reliability and safety of the power supply are improved, and the application requirements of all-optical networks are met.

In an embodiment, the first power supply information of the optoelectronic connection module 120 includes power supply distance and equipment real-time power consumption information, or further power supply information, and the present invention is not limited thereto. The second power supply information of the power supply module 110 may be power supply status information (such as power supply current information, power supply voltage information, etc.) or further power supply information, and the present invention is not limited thereto.

It should also be noted that the output power source of the power supply module 110 may be an output voltage, or an output current, or may include both the output voltage and the output current, and the present invention is not limited thereto.

In an embodiment, unlike ordinary electric cables and optical cables, the optoelectronic connection module 120 can support hot plug and quick installation of optical fibers and power supplies with an integrated design, and can integrate the optical signal transmission function with the power supply function.

In an embodiment, a plurality of power supply modules 110 and a plurality of optoelectronic connection modules 120 are provided. The number of power supply modules 110 corresponds to the number of optoelectronic connection modules 120. Each of the power supply modules 110 is connected to a respective one of the optoelectronic connection modules 120. In an embodiment, one or more power supply modules 110 and one or more optoelectronic connection modules 120 are provided. The numbers of the power supply modules 110 and the optoelectronic connection modules 120 can be appropriately selected according to the practical application situation, which is not specifically limited in this embodiment.

The power supply device 100 described in an embodiment of the present invention is intended for a better understanding of rather than limitations to the technical scheme of various embodiments of the present invention. It is known to those having ordinary skills in the art that, with the evolution of the network standards and the emergence of new application scenarios, the technical scheme provided by the embodiment of the present invention is also applicable to similar technical problems.

FIG. 2 shows a power supply device 100 according to another embodiment of the present invention. As shown in FIG. 2, the power supply device 100 is connected to the loads 200 through hybrid cables. The power supply device 100 includes an optoelectronic connection module 120, a power supply module 110, and an optoelectronic control module 130. The optoelectronic connection module 120 is configured to connect a hybrid cable including an optical cable and an electric cable. The power supply module 110 is electrically connected with the electric cable in the hybrid cable through the optoelectronic connection module 120. The optoelectronic control module 130 is connected to the power supply module 110, and is connected to the optical cable in the hybrid cable through the optoelectronic connection module 120.

In an embodiment where the power supply device 100 is connected with a load 200 through a hybrid cable, the optoelectronic control module 130 can receive the first power supply information transmitted by the load 200 through the optical cable in the hybrid cable through the optoelectronic connection module 120, and the optoelectronic control module 130 can also receive the second power supply information transmitted by the power supply module 110, and adjust the output power source of the power supply module 110 according to the first power supply information and the second power supply information. Therefore, through the real-time matching and coupling of optical communication service and power supply, the power supply is matched with the power supply demand of load 200. As such, the problems of existing power supply, such as poor maintainability of power supply, insufficient power supply capacity, short distance, high requirements on the external environment, and poor environmental adaptability, are addressed. Remote control of power supply is achieved, power supply efficiency is improved, equipment loss is reduced, and the decrease in reliability caused by insufficient power supply capacity or overvoltage is alleviated.

In an embodiment, the interface adopted by the load 200 matches the interface of the optoelectronic connection module 120. In addition, the load 200 can receive the electric energy and optical signals of the power supply equipment, and perform routine data and service processing. In addition, the service flow and power supply data information of the load 200 can be transmitted to Power Over Fiber (POF) power supply equipment through an optical channel.

In an embodiment, the number of power supply modules 110, the number of loads 200 and the number of optoelectronic connection modules 120 correspond to one another. Each of the loads 200 are connected to a respective one of the optoelectronic connection modules 120. In an embodiment, the power supply module(s) 110, and the optoelectronic connection module(s) 120 can be all provided in the number of one (1) or more than two. The numbers of the power supply modules 110 the load(s) 200, and the optoelectronic connection modules 120 can be appropriately selected according to the practical application situation, which is not specifically limited in this embodiment. It is noted that each of the power supply modules 110 independently supplies power to a respective one of the loads 200. No limitation is made to the power supply capacity of each power supply module 110. If any one of the circuits does not operate properly, the circuit will be protected and isolated independently, and the power supplies of other power supply modules 110 to other loads 200 are not affected.

It should be noted that the first power supply information may include service flow information, power supply data information, and other power supply information of the load 200. The power supply data information may include power supply distance and equipment real-time power consumption information of. The second power supply information of the power supply module 110 may be power supply status information (such as power supply current information, power supply voltage information, etc.) or further power supply information, and the present invention is not limited thereto. The output power source of the power supply module 110 may be an output voltage, or an output current, or may include both the output voltage and the output current, and the present invention is not limited thereto. In an example, the first power supply information of the load 200 includes power supply distance and equipment real-time power consumption information, the second power supply information of the power supply module 110 is power supply voltage information, and the output power source of the power supply module 110 is output voltage. When the power supply voltage information remains unchanged, the power supply distance is reduced and the equipment real-time power consumption is also reduced, it is necessary to reduce the output voltage of the power supply module 110 to adapt to different power supply distances and load energy consumption requirements. As such, the power supply capability is improved, the power supply loss is reduced, and the power supply efficiency is enhanced.

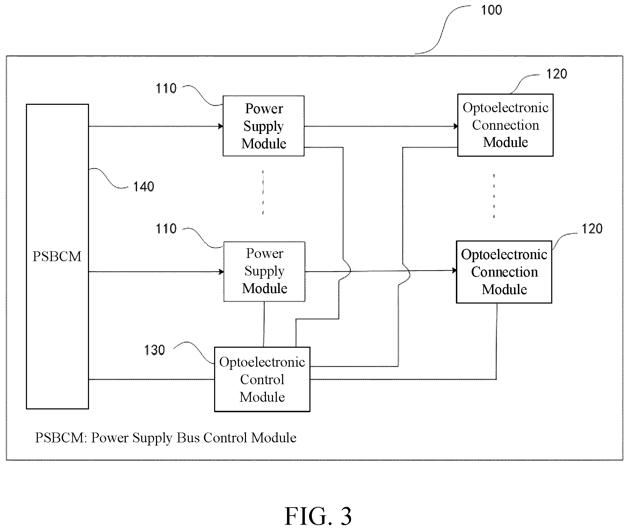

FIG. 3 depicts a schematic diagram showing a power supply device 100 according to another embodiment of the present invention. As shown in FIG. 3, the power supply device 100 further includes a power supply bus control module 140 respectively connected to the power supply module 110 and the optoelectronic control module 130.

In an embodiment, upon receiving third power supply information from the power supply bus control module 140, the optoelectronic control module 130 can adjust the output power source of the power supply bus control module 140 according to the third power supply information, thus facilitating the adjustment and switch of the power supply of the power supply bus control module 140.

It is noted that the third power supply information may be bus power supply data information of the power supply bus control module 140, or other power supply information. The output power source of the power supply bus control module 140 may be the output voltage of the power supply bus control module 140, or the output current of the power supply bus control module 140, or may include both the output voltage and the output current of the power supply bus control module 140, and the present invention is not limited thereto.

It is noted that the power supply bus control module 140 can receive the output power source of the power supply module 110, and can control and protect the power supply, and can also monitor the bus power supply. The power supply bus control module 140 may be a DC power supply bus control module or other types of power supply bus control modules, and is not specifically limited here.

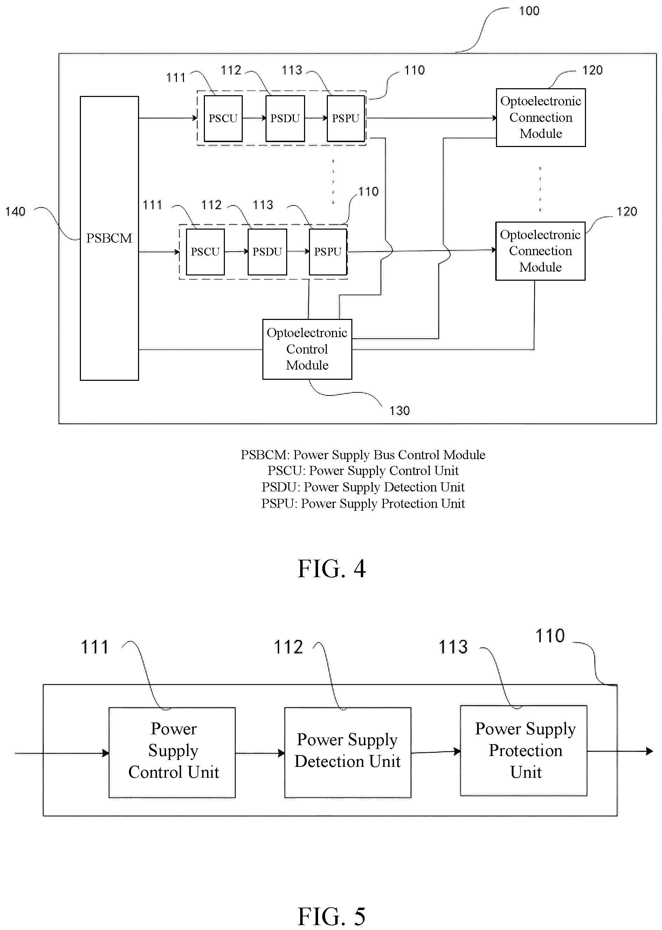

In some embodiments, referring to FIGS. 4 and 5, the power supply module 110 further includes a power supply control unit 111, a power supply detection unit 112, and a power supply protection unit 113 which are connected in the sequence as shown. The power supply control unit 111 is connected to the power supply bus control module 140. The power supply protection unit 113 is connected to the optoelectronic connection module 120.

In an embodiment, the power supply control unit 111 can receive the first output circuit information of the optoelectronic control module 130, and then adjust the output power source of the power supply bus control module 140 according to the first output circuit information. Therefore, the power supply control unit 111 can adjust and switch the output power source of the power supply bus control module 140 to adapt to different power supply distances and load energy consumption requirements, and to reduce power supply loss and improve power supply efficiency. It is worth noting that the output power source of the power supply bus control module 140 may be the output voltage of the power supply bus control module 140, or the output current of the power supply bus control module 140, or may include both the output voltage and the output current of the power supply bus control module 140, and the present invention is not limited thereto.

In an embodiment, the power supply control unit 111 can receive the output power source of the power supply bus control module 140, and control the power on and off of the power supply bus control module 140. In addition, the power supply control unit 111 can also transmit the output power source of the power supply bus control module 140 to the power supply detection unit 112. The power supply detection unit 112 can detect the power supply state of the power supply terminal and transmit the power supply state information (such as power supply voltage and current information) to the optoelectronic control module 130. The power supply protection unit 113 can protect the power supply of the optoelectronic connection module 120 to prevent external overvoltage (such as abnormal voltage like lightning strikes and surges) from damaging the internal circuit of the power supply, which is not specifically limited in this embodiment.

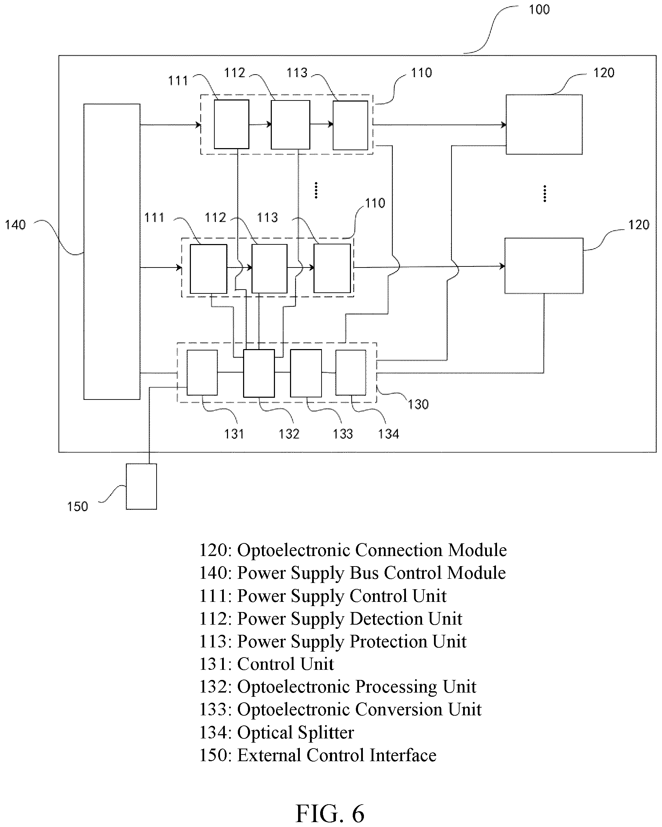

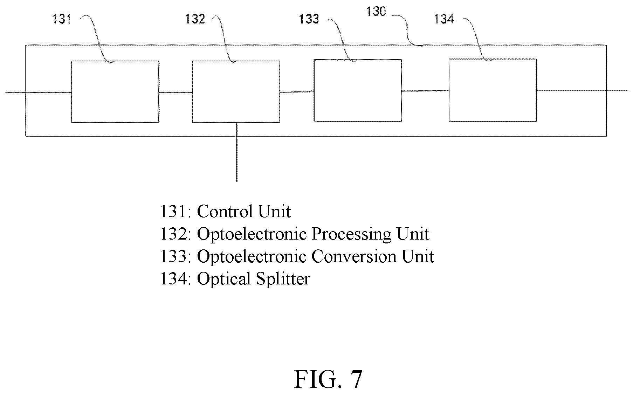

In some embodiments, referring to FIGS. 6 and 7, the optoelectronic control module 130 further includes a control unit 131, an optoelectronic processing unit 132, an optoelectronic conversion unit 133, and an optical splitter 134, which are connected in the sequence as shown. The control unit 131 is connected to the power supply bus control module 140. The optical splitter 134 is connected to the optoelectronic connection module 120.

In an embodiment, the control unit 131 can receive the third power supply information from the power supply bus control module 140, parse and process the third power supply information to obtain the first output circuit information, and then send the obtained first output circuit information to the optoelectronic processing unit 132. As such, the optoelectronic processing unit 132 can adjust the output power source of the power supply bus control module 140 according to the first output circuit information. It is worth noting that the third power supply information may be bus power supply data information of the power supply bus control module 140 or other power supply information, and the output power source of the power supply bus control module 140 may be the output voltage of the power supply bus control module 140, or the output current of the power supply bus control module 140, or it may include both the output voltage and the output current of the power supply bus control module 140, and the present invention is not limited thereto.

In an embodiment, the control unit 131 can also parse and process the second power supply information and the first power supply information to obtain second output circuit information, and then send the second output circuit information to the optoelectronic processing unit 132. As such, the optoelectronic processing unit 132 can control the output power source of the power supply module 110 according to the second output circuit information.

In an embodiment, the control unit 131 is connected with an external control interface 150 through which an external control signal is received by the control unit 131. The target control signal is acquired according to the external control signal and the preset system control strategy. Then, the output power source of the power supply module 110 is adjusted according to the target control signal, which is beneficial to controlling the output power source set by the system. In case of insufficient power supply interfaces, the external control interface 150 cascades to receive the host control signals, for expanding the power supply interfaces.

In an embodiment, the optoelectronic processing unit 132 can receive data signals from the control unit 131 and the optoelectronic connection module 120, as well as data information from the power supply detection unit 112 and the power supply control unit 111, and can process the data information. The optical splitter 134 can distribute and collect the optical signals of n optoelectronic connection modules 120, and then transmit them to the optoelectronic conversion unit 133, where n is a positive integer. The optoelectronic conversion unit 133 can convert the optical signal of the optoelectronic connection module 120 into an electrical signal, and then transmit the signal to the optoelectronic processing unit 132, the present invention is not limited thereto. It is noted that the optical splitter 134 may be a *1: n* optical splitter, where *n* is a positive integer, or may be an optical splitter 134 of another type, and the present invention is not limited thereto.

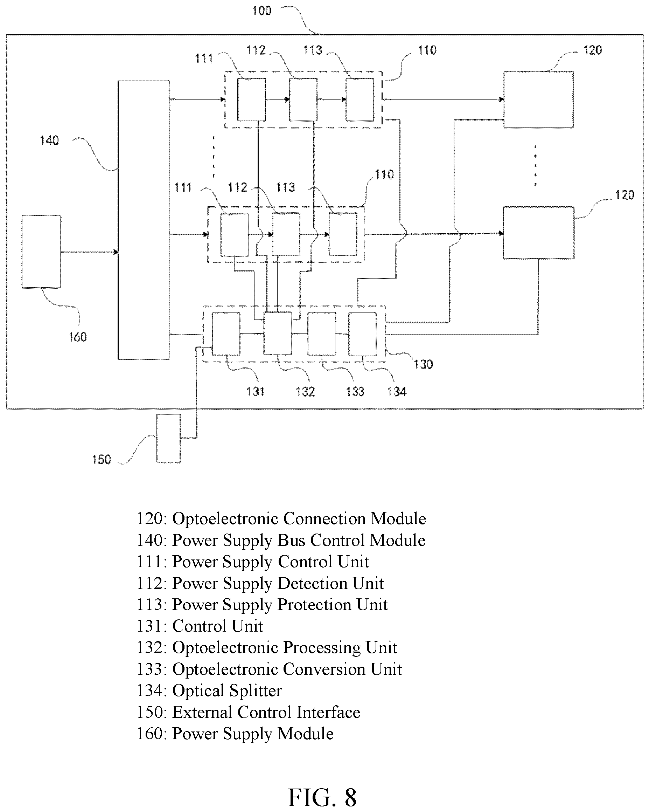

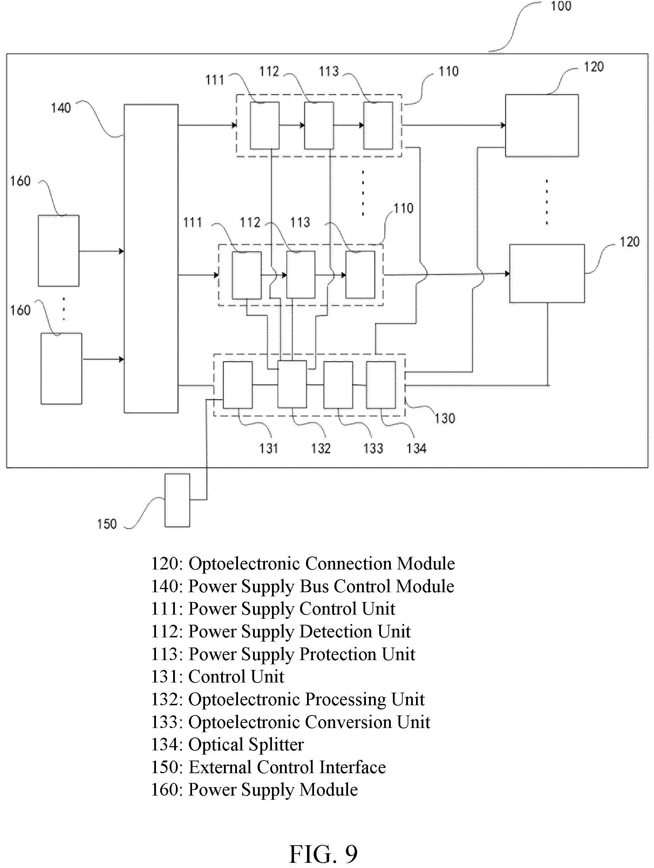

FIG. 8 depicts a schematic diagram showing a power supply device 100 according to another embodiment of the present invention. As shown in FIG. 8, the power supply device 100 further includes a power supply module 160 connected to the power supply bus control module 140. It is worth noting that one or more than two power supply modules 160 may be provided. FIG. 9 shows more than two power supply modules 160 by way of example, and the present invention is not limited thereto.

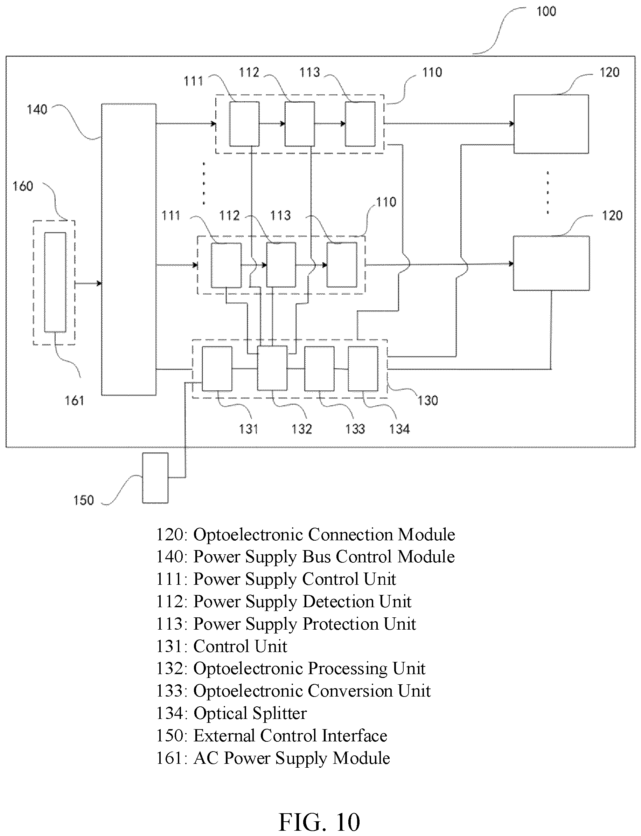

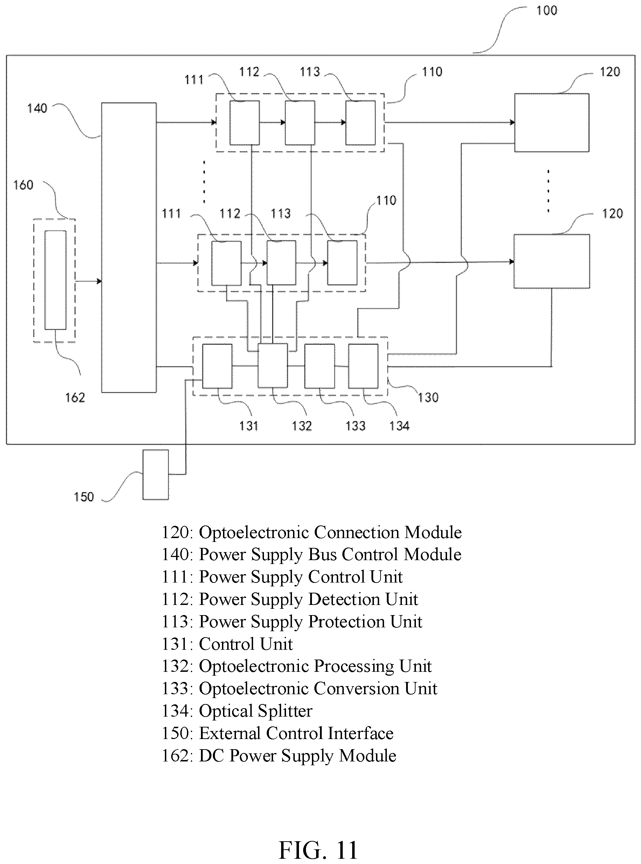

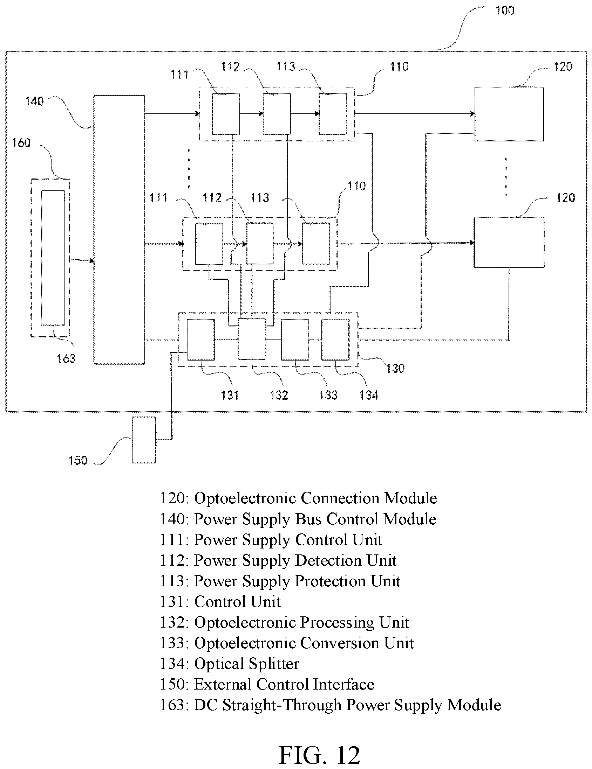

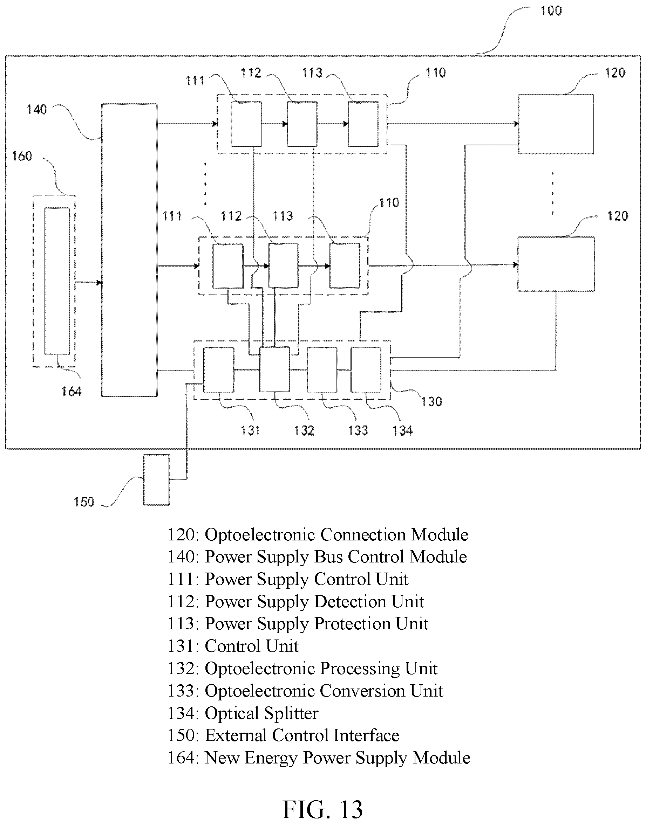

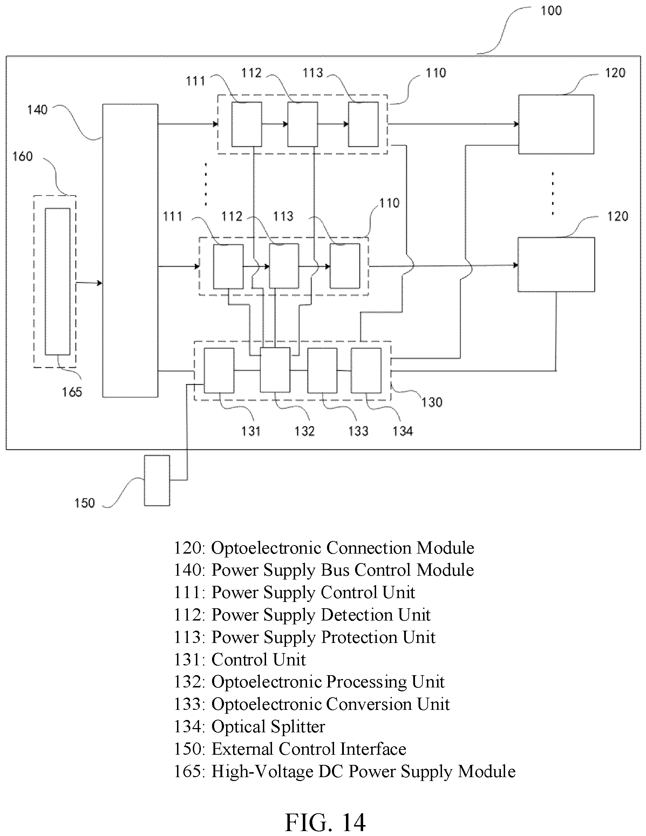

In some embodiments, referring to FIGS. 10 to 14, the power supply module 160 may be an Alternating Current (AC) power supply module 161, a Direct Current (DC) power supply module 162, a DC straight-through power supply module 163, a new energy power supply module 164, or a high-voltage DC power supply module 165, and may also be other types of power supply modules 160 except photovoltaic cells, and the present invention is not limited thereto.

It can be understood by those having ordinary skills in the art that power supply device involved in any one of the embodiments discussed above does not constitute a limitation to the embodiment of the present invention, and more or fewer components than those shown can be included, or some components may be combined, or have different component arrangements.

Several embodiments of a method for supplying power of the present invention are proposed based on the above power supply device.

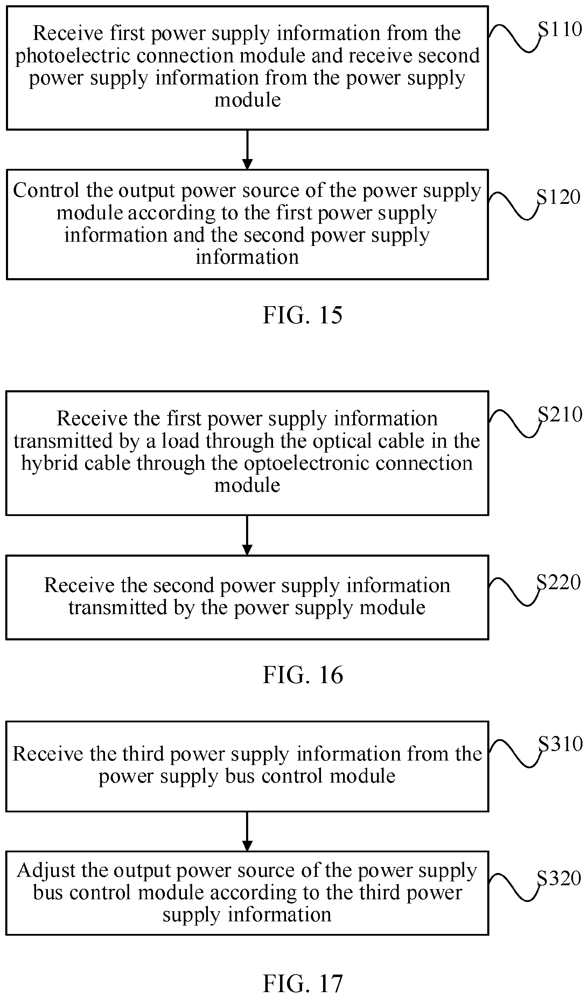

FIG. 15 depicts a flowchart showing a method for supplying power according to an embodiment of the present invention. The method can be applied to the power supply device discussed in the embodiment shown in FIG. 1. The method includes but is not limited to operations S110, and S120 below.

At operation S110, first power supply information is received from the optoelectronic connection module and second power supply information is received from the power supply module.

At operation S 120, the output power source of the power supply module is controlled according to the first power supply information and the second power supply information.

In an embodiment, in the case where the power supply module is electrically connected with the electric cable in the hybrid cable through the optoelectronic connection module and the optoelectronic control module is connected with the optical cable in the hybrid cable through the optoelectronic connection module, the optoelectronic control module can receive the first power supply information from the optoelectronic connection module and the second power supply information from the power supply module, and control the output power source of the power supply module according to the first power supply information and the second power supply information. Hence, the power supply can be realized through real-time matching and coupling of optical communication services and power supply with one plug of the optical fiber connector and the power supply connector. The complexity and difficulty of power supply operation are reduced, the reliability and safety of the power supply are improved, and the application requirements of all-optical networks are met.

In an embodiment, the first power supply information of the optoelectronic connection module includes power supply distance and equipment real-time power consumption information, or further power supply information, and the present invention is not limited thereto. The second power supply information of the power supply module may be power supply status information (such as power supply current information, power supply voltage information, etc.) or further power supply information, and the present invention is not limited thereto.

It should also be noted that the output power source of the power supply module may be an output voltage, or an output current, or may include both the output voltage and the output current, and the present invention is not limited thereto.

In an embodiment, unlike ordinary electric cables and optical cables, the optoelectronic connection module can support hot plug and quick installation of optical fibers and power supplies with an integrated design, and can integrate the optical signal transmission function with the power supply function.

In an embodiment, a plurality of power supply modules and a plurality of optoelectronic connection modules are provided. The number of power supply modules corresponds to the number of optoelectronic connection modules. Each of the power supply modules is connected to a respective one of the optoelectronic connection modules. In an embodiment, one or more power supply modules and one or more optoelectronic connection modules are provided. The numbers of the power supply modules and the optoelectronic connection modules can be appropriately selected according to the practical application situation, which is not specifically limited in this embodiment.

In an embodiment, when the power supply device is connected to the load through the hybrid cable, then, referring to FIG. 16, operation S110 may include but not limited to operation S210 and operation S220.

At operation S210, the first power supply information transmitted by a load through the optical cable in the hybrid cable is received through the optoelectronic connection module.

At operation S220, the second power supply information transmitted by the power supply module is received.

In an embodiment where the power supply device is connected with a load through a hybrid cable, the optoelectronic control module can receive the first power supply information transmitted by the load through the optical cable in the hybrid cable through the optoelectronic connection module, and the optoelectronic control module can also receive the second power supply information transmitted by the power supply module, and adjust the output power source of the power supply module according to the first power supply information and the second power supply information. Therefore, through the real-time matching and coupling of optical communication service and power supply, the power supply is matched with the power supply demand of load. As such, the problems of existing power supply, such as poor maintainability of power supply, insufficient power supply capacity, short distance, high requirements on the external environment, and poor environmental adaptability, are addressed. Remote control of power supply is achieved, power supply efficiency is improved, equipment loss is reduced, the decrease in reliability caused by insufficient power supply capacity or overvoltage is alleviated.

In an embodiment, the interface adopted by the load matches the interface of the optoelectronic connection module. In addition, the load can receive electric energy and optical signals of the power supply equipment, perform routine data and service processing. In addition, the service flow and power supply data information of the load can be transmitted to Power Over Fiber (POF) power supply equipment through an optical channel.

In an embodiment, the number of power supply modules, the number of loads and the number of optoelectronic connection modules correspond to one another. Each of the loads are connected to a respective one of the optoelectronic connection modules. In some embodiments, the power supply module(s), the load(s), and the optoelectronic connection module(s) can be all provided in the number of one (1) or more than two (2). The numbers of the power supply modules, the loads and the optoelectronic connection modules can be appropriately selected according to the practical application situation, which is not specifically limited in this embodiment. It is noted that each of the power supply modules independently supplies power to a respective one of the loads. No limitation is made to the power supply capacity of each power supply module. If any one of the circuits does not operate properly, the circuit will be protected and isolated independently, and the power supplies of other power supply modules to other loads are not affected.

It should be noted that the first power supply information may include service flow information, power supply data information and other power supply information of the load. The power supply data information may include power supply distance and equipment real-time power consumption information. The second power supply information of the power supply module may be power supply status information (such as power supply current information, power supply voltage information, etc.) or other power supply information, and the present invention is not limited thereto. The output power source of the power supply module may be an output voltage, or an output current, or may include both the output voltage and the output current, and the present invention is not limited thereto. In an example, the first power supply information of the load includes power supply distance and equipment real-time power consumption information, the second power supply information of the power supply module is power supply voltage information, and the output power source of the power supply module is output voltage. When the power supply voltage information remains unchanged, the power supply distance is reduced and the equipment real-time power consumption is also reduced, it is necessary to reduce the output voltage of the power supply module to adapt to different power supply distances and load energy consumption requirements. As such, the power supply capability is improved, the power supply loss is reduced, and the power supply efficiency is enhanced.

In an embodiment, the power supply device further includes a power supply bus control module connected to the power supply module and the optoelectronic control module respectively. In such a case, the method for supplying power may include, but is not limited to, operations S310, S320 and S330, as shown in FIG. 17.

At operation S310, third power supply information is received from the power supply bus control module.

At operation S320, the output power source of the power supply bus control module is adjusted according to the third power supply information.

In an embodiment, upon receiving third power supply information from the power supply bus control module, the optoelectronic control module can adjust the output power source of the power supply bus control module according to the third power supply information, thus facilitating the adjustment and switch of the power supply of the power supply bus control module.

It is noted that the third power supply information may be bus power supply data information of the power supply bus control module or other power supply information. The output power source of the power supply bus control module may be the output voltage of the power supply bus control module, or the output current of the power supply bus control module, or may include both the output voltage and the output current of the power supply bus control module, and the present invention is not limited thereto.

It is noted that the power supply bus control module can receive the output power source of the power supply module, and can control and protect the power supply, and can also monitor the bus power supply. The power supply bus control module may be a DC power supply bus control module or other types of power supply bus control modules, and is not specifically limited here.

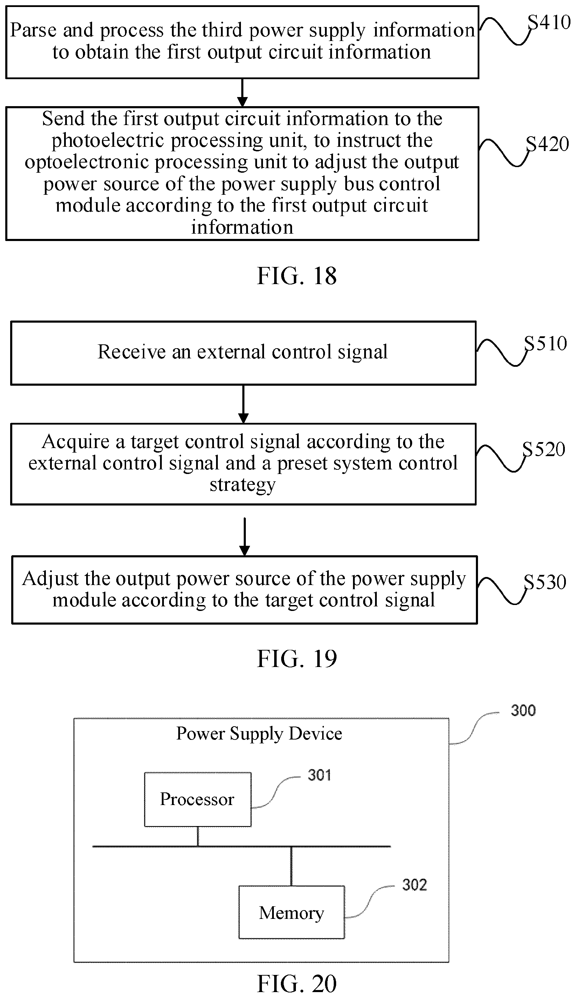

In an embodiment, the optoelectronic control module includes a control unit, an optoelectronic processing unit, an optoelectronic conversion unit and an optical splitter, which are connected in sequence. The control unit is connected to the power supply bus control module. The optical splitter is connected to the optoelectronic connection module. In such a case, operation S320 may include, but is not limited to, operation S410 and operation S420, as shown in FIG. 18.

At operation S410, the third power supply information is parsed and processed to obtain the first output circuit information.

At operation S420, the first output circuit information is sent to the optoelectronic processing unit, to instruct the optoelectronic processing unit to adjust the output power source of the power supply bus control module according to the first output circuit information.

In an embodiment, the control unit can receive the third power supply information from the power supply bus control module, parse and process the third power supply information to obtain the first output circuit information, and then send the obtained first output circuit information to the optoelectronic processing unit. As such, the optoelectronic processing unit can adjust the output power source of the power supply bus control module according to the first output circuit information. It is worth noting that the third power supply information may be bus power supply data information of the power supply bus control module or other power supply information. The output power source of the power supply bus control module may be the output voltage of the power supply bus control module, or the output current of the power supply bus control module, or may include both the output voltage and the output current of the power supply bus control module, and the present invention is not limited thereto.

In an embodiment, the control unit can also parse and process the second power supply information and the first power supply information to obtain second output circuit information, and then send the second output circuit information to the optoelectronic processing unit. As such, the optoelectronic processing unit can control the output power source of the power supply module according to the second output circuit information.

In an embodiment, the optoelectronic processing unit can receive data signals from the control unit and the optoelectronic connection module, as well as data information from the power supply detection unit and the power supply control unit, and can process the data information. The optical splitter can distribute and collect the optical signals of n optoelectronic connection modules, and then transmit them to the optoelectronic conversion unit, where n is a positive integer. The optoelectronic conversion unit can convert the optical signal of the optoelectronic connection module into an electrical signal, and then transmit the signal to the optoelectronic processing unit, the present invention is not limited thereto. It is noted that the optical splitter may be a 1: *n* optical splitter, where *n* is a positive integer, or may be optical splitter of another type, and the present invention is not limited thereto.

In an embodiment, the optoelectronic control module includes a control unit, an optoelectronic processing unit, an optoelectronic conversion unit and an optical splitter, which are connected in sequence. The control unit is connected to the power supply bus control module. The optical splitter is connected to the optoelectronic connection module. In such a case, the method may include, but is not limited to, operations S510, S520, and S530, as shown in FIG. 19.

At operation S510, an external control signal is received.

At operation S520, a target control signal is acquired according to the external control signal and a preset system control strategy.

At operation S530, the output power source of the power supply module is adjusted according to the target control signal.

In an embodiment, the control unit is connected with an external control interface through which an external control signal is received by the control unit. The target control signal is acquired according to the external control signal and the preset system control strategy. Then, the output power source of the power supply module is adjusted according to the target control signal, which is beneficial to controlling the output power set by the system.

FIG. 20 depicts a schematic diagram showing a power supply device 300 according to an embodiment of the present invention. As shown in FIG. 20, the power supply device 300 includes but is not limited to:
a memory 302 configured to store a program; and
a processor 301 configured to execute the program stored in the memory 302, where when the processor 301 executes the program stored in the memory 302, the processor 301 is caused to perform any one of the methods for supplying power described above.

The processor 301 and the memory 302 may be connected by a bus or other means.

The memory 302, as a non-transient computer-readable storage medium, can be configured to store non-transitory software programs and non-transitory computer-executable programs, such as the method for supplying power as described in any one of the embodiments above in the present invention. The processor 301 executes the non-transitory software programs and instructions stored in the memory 302, such that the method for supplying power as described in any one of the embodiments above is carried out.

The memory 302 may include a program storage section and a data storage section, in which the program storage section may store an operating system and application programs for performing at least one operation, and data storage section may store program of the method for supplying power as described in any one of the embodiments above. In addition, the memory 302 can include high-speed random-access memory and non-transitory memory, such as at least one disk memory device, flash memory device, or other non-transitory solid-state memory devices. In some implementations, the memory 302 may include memories remotely located relative to the processor 301, and these remote memories may be connected to the processor 301 through a network. Examples of the above networks include, but are not limited to, the Internet, intranet, local area network, mobile communication network, and combinations thereof.

Non-transitory software programs and instructions of the method for supplying power in any one of the above embodiments are stored in a memory 302 which, when executed by a processor 301, cause the processor 301 to carry out the method for supplying power discussed in any one of the above embodiments, e.g., the above-described operations S110 to S120 described in conjunction with FIG. 15, S210 to S220 described in conjunction with FIG. 16, S310 to S320 described in conjunction with FIG. 17, S410 to S420 described in conjunction with FIG. 18, or S510 to S530 described in conjunction with FIG. 19.

It shall be noted that, the power supply device discussed in this embodiment can be the power supply device discussed in any one of FIGS. 1 to 14, all of which belong to the same concept, so they have the same implementing principle and beneficial effects, and will not be described in detail here.

The above-described device embodiments or system embodiments are only illustrative, in which the units illustrated as separate components may or may not be physically separated, that is, they may be located in one place or distributed over several network units. Some or all of the modules can be selected according to the practical needs to achieve the purpose of this embodiment.

According to an embodiment of the present invention, a computer-readable storage medium is provided, which stores computer-executable instructions which, when executed by a processor or controller, for example, causes the processor or controller to carry out the operations of the method described above, for example, the above-described operations S110 to S120 described in conjunction with FIG. 15, S210 to S220 described in conjunction with FIG. 16, S310 to S320 described in conjunction with FIG. 17, S410 to S420 described in conjunction with FIG. 18; or S510 to S530 described in conjunction with FIG. 19.

According to an embodiment of the present invention, a computer program product is provided. The computer program product includes a computer program or a computer instruction stored in a computer-readable storage medium. A processor of a computer device can read the computer program or computer instruction from the computer-readable storage medium. The computer program or computer instruction which, when executed by the processor, causes the computer device to carry out the operations of the method for supplying power as described in any one of the embodiments above, for example, the above-described operations S110 to S120 described in conjunction with FIG. 15, S210 to S220 described in conjunction with FIG. 16, S310 to S320 described in conjunction with FIG. 17, S410 to S420 described in conjunction with FIG. 18, or S510 to S530 described in conjunction with FIG. 19.

According to an embodiment, a power supply device is provided. The power supply device includes, an optoelectronic connection module, configured to connect with a hybrid cable that includes an optical cable and an electrical cable; a power supply module electrically connected with the electrical cable in the hybrid cable through the optoelectronic connection module; and an optoelectronic control module, connected with the power supply module and connected with the optical cable in the hybrid cable through the optoelectronic connection module. The optoelectronic control module is configured to receive first power supply information from the optoelectronic connection module and second power supply information from the power supply module, and control an output power source of the power supply module according to the first power supply information and the second power supply information. According to an embodiment, in the case where the power supply module is electrically connected with the electric cable in the hybrid cable through the optoelectronic connection module and the optoelectronic control module is connected with the optical cable in the hybrid cable through the optoelectronic connection module, the first power supply information from the optoelectronic connection module and the second power supply information from the power supply module can be received. The output power source of the power supply module is controlled according to the first power supply information and the second power supply information. Hence, the power supply can be realized through real-time matching and coupling of optical communication services and power supply with the one-plug of the optical fiber connector and the power supply connector. The complexity and difficulty of power supply operation are reduced, the reliability and safety of power supply are improved, and the application requirements of all-optical networks are met.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present invention, but the present invention is not limited to the above embodiments. Those having ordinary skills in the art can make various equivalent modifications or substitutions without departing the scope of the present invention, and these equivalent modifications or substitutions are within the scope defined by the claims of the present invention.

## Claims

1. A power supply device, comprising:
an optoelectronic connection module, arranged to connect with a hybrid cable comprising an optical cable and an electrical cable;
a power supply module electrically connected with the electrical cable in the hybrid cable through the optoelectronic connection module;
an optoelectronic control module, connected with the power supply module and connected with the optical cable in the hybrid cable through the optoelectronic connection module; wherein
the optoelectronic control module is configured to receive first power supply information from the optoelectronic connection module and second power supply information from the power supply module, and control an output power source of the power supply module according to the first power supply information and the second power supply information.

2. The power supply device as claimed in claim 1, wherein the hybrid cable is arranged to be connected with a load; and
the optoelectronic control module is configured to:
receive the first power supply information transmitted by the load through the optical cable in the hybrid cable through the optoelectronic connection module;
receive the second power supply information transmitted by the power supply module; and
adjust the output power source of the power supply module according to the first power supply information and the second power supply information.

3. The power supply device as claimed in claim 1, further comprising a power supply bus control module connected to the power supply module and the optoelectronic control module respectively; wherein
the optoelectronic control module is further configured to:
receive third power supply information from the power supply bus control module; and
adjust an output power source of the power supply bus control module according to the third power supply information.

4. The power supply device as claimed in claim 3, wherein the optoelectronic control module comprises a control unit and an optoelectronic processing unit, and the control unit is respectively connected to the power supply bus control module and the optoelectronic processing unit;
the control unit is configured to:
receive the third power supply information from the power supply bus control module; and
parse and process the third power supply information to acquire first output circuit information; and
send the first output circuit information to the optoelectronic processing unit, to instruct the optoelectronic processing unit to adjust the output power source of the power supply bus control module according to the first output circuit information.

5. The power supply device as claimed in claim 4, wherein the control unit is further configured to:
parse and process the first power supply information and the second power supply information to acquire second output circuit information; and
send the second output circuit information to the optoelectronic processing unit, to instruct the optoelectronic processing unit to control the output power source of the power supply module according to the second output circuit information.

6. The power supply device as claimed in claim 3, wherein the power supply module comprises a power supply control unit, a power supply detection unit and a power supply protection unit, the power supply control unit is connected to the power supply detection unit that is in turn connected to the power supply protection unit; and the power supply control unit is connected to the power supply bus control module, and the power supply protection unit is connected to the optoelectronic connection module.

7. The power supply device as claimed in claim 1, wherein more than two power supply modules are provided, the power supply module is one of the more than two power supply modules; more than two optoelectronic connection modules are provided, the optoelectronic connection module is one of the more than two optoelectronic connection modules; and each of the more than two power supply modules is connected with a respective one of the more than two optoelectronic connection modules.

8. The power supply device as claimed in claim 1, wherein the optoelectronic control module is further configured to:
receiving an external control signal;
acquire a target control signal according to the external control signal and a preset system control strategy; and
adjust the output power source of the power supply module according to the target control signal.

9. A method for supplying power, applied to a power supply device that comprises an optoelectronic connection module, a power supply module, and an optoelectronic control module; wherein the power supply module is electrically connected with an electrical cable in a hybrid cable through the optoelectronic connection module; the optoelectronic control module is connected with the power supply module and connected with an optical cable in the hybrid cable through the optoelectronic connection module;
the method comprises:
receiving first power supply information from the optoelectronic connection module, and receiving second power supply information from the power supply module; and
controlling an output power source of the power supply module according to the first power supply information and the second power supply information.

10. The method as claimed in claim 9, wherein the hybrid cable is arranged to be connected with a load; and
receiving the first power supply information from the optoelectronic connection module and receiving the second power supply information from the power supply module comprises:
receiving the first power supply information transmitted by the load through the optical cable in the hybrid cable through the optoelectronic connection module; and
receiving the second power supply information transmitted by the power supply module.

11. The method as claimed in claim 9, wherein the power supply device further comprises a power supply bus control module respectively connected to the power supply module and the optoelectronic control module; and
the method further comprises,
receiving third power supply information from the power supply bus control module; and
adjusting an output power source of the power supply bus control module according to the third power supply information.

12. The method as claimed in claim 11, wherein the optoelectronic control module comprises a control unit and an optoelectronic processing unit, and the control unit is respectively connected to the power supply bus control module and the optoelectronic processing unit; and
adjusting the output power source of the power supply bus control module according to the third power supply information, comprises
parsing and processing the third power supply information to acquire first output circuit information; and
sending the first output circuit information to the optoelectronic processing unit, to instruct the optoelectronic processing unit to adjust the output power source of the power supply bus control module according to the first output circuit information.

13. The method as claimed in claim 11, wherein the optoelectronic control module comprises a control unit and an optoelectronic processing unit, and the control unit is respectively connected to the power supply bus control module and the optoelectronic processing unit; and
controlling the output power source of the power supply module according to the first power supply information and the second power supply information comprises:
parsing and processing the first power supply information and the second power supply information to acquire second output circuit information; and
controlling the output power source of the power supply module according to the second output circuit information.

14. The method as claimed in claim 9, further comprising:
receiving an external control signal;
acquiring a target control signal according to the external control signal and a preset system control strategy; and
adjusting the output power source of the power supply module according to the target control signal.

15. A power supply device, comprising a memory, a processor and a computer program stored in the memory and executable by the processor (301) which, when executed by the processor causes the processor to carry out the method as claimed in any one of claims 9 to 14.

16. A computer-readable storage medium storing a computer-executable instruction which, when executed by a processor, causes the processor to carry out the method as claimed in any one of claims 9 to 14.

17. A computer program product, comprising a computer program or a computer instruction stored in a computer-readable storage medium which, when executed by a processor of a computer device, causes the computer device to carry out the method as claimed in any one of claims 9 to 14.
